# EUROPÄISCHE PATENTANMELDUNG

(11) **EP 4 795 910 A1**
(43) Veröffentlichungstag der Anmeldung: **26.08.2026**
(21) Anmeldenummer: 25221391.3
(22) Anmeldetag: 08.12.2025
(51) Int. Cl.: A01B 59/06, A01B 63/00, A01D 34/66

(54) **DREIPUNKTLENKERSYSTEM ALS TEIL EINER LANDWIRTSCHAFTLICHEN ERNTEMASCHINE ZUR STABILISIERUNG DER PENDELBEWEGUNG, SYSTEM UND EIN VERFAHREN ZUR STABILISIERUNG DER PENDELBEWEGUNG**

(30) Priorität: 20.02.2025 DE 102025106483
(71) Anmelder: Pöttinger Landtechnik GmbH, 4710 Grieskirchen (AT)
(72) Erfinder: DIETACHMAIR, Andreas, 4710 Grieskirchen, (AT); GREIFENENDER, August, 4710 Grieskirchen, (AT); REININGER, Markus, 4710 Grieskirchen (AT)
(74) Vertreter: Lorenz Seidler Gossel Part. mbB

(57) **Zusammenfassung**

Die Erfindung betrifft ein Dreipunktlenkersystem zur Stabilisierung der Pendelbewegung eines Arbeitsaggregats einer Erntemaschine wie Mäheinheit und/oder Merger, welche an das Dreipunktlenkersystem angekoppelt ist, umfassend einen an einen Schlepper anbaubaren Trägerrahmen, einen Oberlenker, einen ersten Unterlenker und einen zweiten Unterlenker, wobei der erste Unterlenker und der zweite Unterlenker einerseits an dem Arbeitsaggregat und andererseits an dem Trägerrahmen jeweils gelenkig angelenkt sind, wobei der erste Unterlenker und der zweite Unterlenker über ein Drehkreuz miteinander verbunden und um eine schräge Achse, verlaufend vom Bereich um das arbeitsaggregatsseitige Ende des zweiten Unterlenkers zu dem Bereich um das tragrahmenseitige Ende des ersten Unterlenkers durch ein Drehgelenk des Drehkreuzes zueinander drehbar gelagert sind.

## Beschreibung

Die Erfindung betrifft landwirtschaftliche Erntemaschinen mit einem Arbeitsaggregat, das zur Bodenanpassung mittels eines Dreipunktlenkersystems pendelnd aufgehängt ist, und insbesondere auch ein solches Dreipunktlenkersystem zur Stabilisierung der Pendelbewegung einer Mäheinheit und/oder eines Mergers der landwirtschaftlichen Erntemaschine, sowie ein System bestehend aus der landwirtschaftlichen Erntemaschine und einem Traktor, und ein Verfahren zur Stabilisierung der Pendelbewegung.

Frontmähwerke werden grundsätzlich beweglich aufgehängt. Hierbei geht es darum, dass der Mähbalken im Feldbetrieb in seiner bodennahen Arbeitsstellung den Bodenkonturen durch eine bewegliche Aufhängung folgen kann. Einerseits soll ein Festfahren des Mähbalkens an der Bodenkontur verhindert werden, um mögliche Unterbrechungen des Erntevorgangs oder zu Schäden am Mähbalken zu verhindern. Andererseits soll für einen effizienten Erntevorgang die Mäheinheit möglichst nahe an der Bodenkontur geführt werden und dieser leichtfüßig folgen können. Ähnliche Anforderungen gelten für Merger, deren Aufnahmevorrichtung beispielsweise in Form einer Pickup-Stachelwalze der Bodenkontur in geringem Abstand leichtfüßig folgen soll, um einerseits das Erntegut vollständig vom Boden aufzunehmen, andererseits aber ein Einstechen der Zinken in den Boden und damit verbundene Futterverschmutzungen zu vermeiden. Um die Übergabe des aufgenommenen Futters auf den Querförderer, der bspw. ein Querförderband sein kann, soll vorzugsweise auch der Querförderer pendeln bzw. sich bewegen können, um mit der Pickup keinen zu großen Versatz zu erzeugen. Ein solcher Merger kann dabei auch mit einer Mäheinheit in einem Kombinationsgerät zusammengefaßt werden und der Mäheinheit nachlaufen.

Während der Fahrt zum Feld oder auch im Vorgewende bzw. bei Wendemanövern auf dem Feld, welche nicht den Erntevorgang direkt betreffen, ist es hingegen nicht erwünscht, dass der Mähbalken als Teil einer Mäheinheit oder die Mergereinheit sich zu stark bewegen oder hin und her pendeln.

In diesen Situationen wird die Mäh- bzw. Mergereinheit daher in eine Transport- oder Vorgewendestellung in ausreichenden Abstand zum Untergrund gebracht. Hierbei soll die Mäheinheit möglichst stabil in einer Mittelstellung verharren, welche bspw. eine annähernd parallele Stellung in Bezug auf die Bodenkontur sein kann.

Somit liegen für die Arbeitsstellung und die Transport- oder Vorgewendestellung gegensätzliche Anforderungen an die Lagerung der Mäheinheit vor. Die Aufhängung des Arbeitsaggregats soll insofern die Anforderungen hinsichtlich der Lagerung der Mäheinheit sowohl für die Arbeitsstellung als auch für die Transport- und Vorgewendestellung gleichermaßen erfüllen.

Eine Möglichkeit ist es, die Mäh- und/oder Mergereinheit über eine Pendelachse aufzuhängen und verschiedene Maßnahmen der Pendelstabilisierung einzubringen. Hierzu können Zugfedern, Blattfedern, Druckstößel oder auch kombinierte Zug-Druckelemente genutzt werden, welche links und/oder rechts neben der Pendelachse angebracht werden. Dabei kann die Mäheinheit unter eine Vorspannung gebracht werden, die bei Auslenkungen eine Rückstellung zur Neutral- bzw. Ausgangsstellung hin bewirken kann.

Das Mähwerk nur über eine Pendelachse aufzuhängen bringt an sich den Vorteil, dass die Maßnahmen zur Pendelstabilisierung einfach umzusetzen sind, da das Mähwerk nur über diese eine Achse relativ zum Anbaurahmen verschwenkt werden kann. Hieraus ergibt sich, dass zwischen einem Punkt am Anbaurahmen und einem Punkt an der Mäheinheit immer ein definierter Abstand vorliegt. Dies trägt dazu bei, dass Lösungen zur Pendelstabilisierung bei solch einem Aufbau relativ einfach umsetzbar sind.

Eine andere Herangehensweise sieht vor, für die Aufhängung der Mäheinheit ein Dreipunktlenkersystem zu nutzen. Im Gegensatz zur vorher genannten Lösung mit nur einer Pendelachse kann sich der Abstand zwischen einem Punkt am Anbaurahmen und einem Punkt an der Mäh- bzw. Mergereinheit abhängig von der aktuellen Aushubhöhe des Arbeitsaggregats ändern.

Bei solchen Dreipunktlenkersystemen gibt es nach dem Stand der Technik verschiedene Ansätze für die Stabilisierung des Arbeitsaggregats.

Ein solcher Ansatz sieht eine Stabilisierung über die Schwerkraft vor. Hierzu liegt die Aufhängung mit ihrem Zentrum oberhalb des Schwerpunktes der Mäheinheit. Bei einer Auslenkung der Mäheinheit erfolgt deren Rückstellung in die Ausgangslage, welche durch den Schwerpunkt vorgegeben ist. Nachteilig daran ist, dass beim Ausheben der Mäheinheit in einer Hanglage keine Rückstellung in die Mittellage erfolgt, sondern im Gegenteil eine Auslenkung auftritt. Weiterhin kommt es bei diesen Systemen, welche rein über die Schwerkraft funktionieren, in nachteiliger Weise zu Nachschwingungen.

Ferner wurde angedacht, bei einem Dreipunktlenkersystem eine Stabilisierung über Federelemente zu realisieren. Die Federelemente bewirken eine Rückstellkraft zwischen dem Rahmen des Dreipunktlenkersystems und der Mäheinheit. Die Abstände zwischen Rahmen und Mäheinheit und somit auch die Federkräfte sind hier von der aktuellen Aushubhöhe abhängig. Die eingesetzten Rückstellfedern haben weiterhin je nach Position eine unterschiedliche Rückstellwirkung.

Die über die Federspannung erzeugten Rückstellkräfte beeinflussen allerdings auch die Entlastung, wenn sich das Mähwerk in der Arbeitsstellung in Bodenauflage befindet. Dies ist nachteilig, da der Kontakt zum Boden durch die rückwirkenden Kräfte verringert ist und die Bodenkonturen somit weniger präzise nachgefahren werden können.

Die Schrift EP 3 061 337 A1 offenbart eine Heuwerbungsmaschine in Form eines Mergers. Hierbei wird eine bewegliche Lagerung des Mergers offenbart, wobei eine Lenkeranordnung zum Einsatz kommt. Weiterhin werden eine Gewichtsentlastungseinheit, welche mit dem Merger und der Lenkeranordnung verbunden ist, beschrieben. Weiterhin werden verschiedene Federeinrichtungen offenbart.

Die Schrift EP 1 593 294 A1 offenbart eine Aufhängungsvorrichtung für ein Mähwerk. Hierbei wird eine schwenkbare Lagerung des Mähwerks beschrieben. Dies wird durch eine Lenkeranordnung und verschiedene Federsysteme ermöglicht.

Die Schrift EP 4 252 503 A1 offenbart einen landwirtschaftlichen Mäher zum Betreiben im Schubbetrieb. Das Mähwerk ist hierbei pendelbar an einem Rahmen aufgehängt. Der Mäher weist einen Linearaktor auf, mit dem das Mähwerk, insbesondere in angehobener Stellung, in der Mittellage feststellbar ist. Dieser Linearaktor ist zwischen einer Anlenkung am Rahmen des Mähers und einer Anlenkung am Mähwerk angelenkt. Dabei wirkt der genannte Linearaktor direkt auf das Mähwerk ein.

Weiterhin offenbart die Schrift EP 4 252 503 A1, dass das Mähwerk über zwei voneinander beabstandete Kugelgelenklager aufgehängt ist. Die Verbindungslinie zwischen den genannten Kugelgelenklagern bildet eine Schwenkachse, um die das Mähwerk hin und her schwenkbar ist. Dies ist nicht vergleichbar mit der in der vorliegenden Erfindung eingeführten schrägen Drehachse, welche durch die Unterlenker und das Drehkreuz vorgegeben ist.

Aufgabe der vorliegenden Erfindung ist es eine verbesserte Erntemaschine, eine verbesserte Dreipunktlenkeraufhängung, sowie ein verbessertes Verfahren der eingangs genannten Art zu schaffen, die die Nachteile des Standes der Technik vermeiden und letzteren in vorteilhafterweise weiterbilden. Insbesondere soll eine verbesserte Pendelstabilisierung des Arbeitsaggregats geschaffen werden, die Nachteile hinsichtlich der Rückstellwirkung in der Arbeitsstellung und die Abhängigkeit der Rückstellwirkung von der Aushubhöhe des Mähwerks vermeidet. Gleichzeitig soll eine ausreichende Stabilisierung in der Transport- und Vorgewendestellung erreicht werden.

Diese Aufgabe wird durch das Dreipunktlenkersystem gemäß Anspruch 1, eine landwirtschaftliche Erntemaschine gemäß Anspruch 11, ein System gemäß Anspruch 13 sowie das Verfahren gemäß Anspruch 14 gelöst. Bevorzugte Weiterbildungen der Erfindung sind in den Unteransprüchen offenbart.

Die vorliegende Erfindung umfasst ein Dreipunktlenkersystem zur Stabilisierung der Pendelbewegung einer Mäheinheit und/oder eines Mergereinheit beim Auslenken, welche an das Dreipunktlenkersystem angekoppelt ist. Das Dreipunktlenkersystem umfasst einen Trägerrahmen, einen Oberlenker, einen ersten Unterlenker und einen zweiten Unterlenker, wobei der erste Unterlenker und der zweite Unterlenker einerseits an der Mäheinheit und/oder Mergereinheit und andererseits an den Trägerrahmen jeweils gelenkig angelenkt sind. Der erste Unterlenker und der zweite Unterlenker sind über ein Drehkreuz miteinander verbunden, wobei die beiden Unterlenker um eine schräge Achse, verlaufend vom Bereich um das Ende des zweiten Unterlenkers, welches mit der Mäheinheit und/oder Merger verbunden ist, zu dem Bereich um das Ende des ersten Unterlenkers, welches von der Mäheinheit und/oder dem Merger abgewendet ist, durch das ein Drehgelenk bildende Drehkreuz relativ zueinander drehbar sind.

Vorzugsweise kann an dem Drehkreuz ein Aktor angreifen, der ein Moment bezüglich des Drehgelenks ausüben kann, welches über die beiden Hälften des Drehkreuzes auf die beiden Unterlenker wirken kann, sodass eine Rückstellung der Mäheinheit in eine Ausgangsstellung nach einer Auslenkung über den ersten und zweiten Unterlenker erfolgen kann.

Insbesondere kann die Ausgangsstellung, in die die Mäheinheit und/oder der Merger zurückgestellt werden kann, einer Ausrichtung der Mäheinheit und/oder des Mergers, welche zumindest näherungsweise rechtwinklig zur z-Achse des Dreipunktlenkersystems sein kann. Die z-Achse kann hierbei eine aufrechte Achse sein, die näherungsweise senkrecht zur Bodenaufstandsfläche sein kann, auf der bspw. ein Schlepper steht, an dem die Erntemaschine angebaut sein kann. Die besagte z-Achse ist bei horizontaler Aufstandsfläche näherungsweise vertikal, kann aber bei abschüssiger und/oder schräg geneigter Aufstandsfläche auch entsprechend gegenüber der Vertikalen geneigt sein.

In vorteilhafter Weiterbildung der Erfindung kann der Aktor über eine Steuerungseinheit gezielt ansteuerbar sein, derart, dass die Mäheinheit und/oder der Merger in die Ausgangsstellung zurückgebracht werden kann, wenn die Mäheinheit und/oder der Merger einer kurvigen Bewegung ausgesetzt ist und/oder sich in Vorgewendestellung und/oder Transportstellung befindet, was beispielsweise durch einen oder mehrere Sensoren oder eine geeignete Erfassungseinrichtung erfaßt werden kann und/oder von einem Lenksignal des Schleppers und/oder einem Aushubsignal bestimmt werden kann.

Beispielsweise kann der Aktor eine Drehstabfeder und/oder eine Zug- und/oder Druckfeder und/oder einen Stellzylinder umfassen.

In vorteilhafter Ausgestaltung der Erfindung kann der Stellzylinder einen Druckmittel-, bspw. einen Hydraulikzylinder umfassen. In einer alternativen Ausgestaltung kann es sich hierbei auch um einen Pneumatikzylinder handeln.

Insbesondere kann der Druckmittelzylinder mit einem Druckmittelspeicher verbunden sein, so dass der Zylinder wie eine längbare Feder wirken kann.

Alternativ oder zusätzlich kann der Aktor aber auch einen rotatorisch arbeitenden Druckmittelaktor bspw. in Form eines Hydraulikmotors umfassen. Alternativ oder zusätzlich kann aber auch ein elektrischer Stellaktor bspw. in Form einer elektromotorischen Stellspindel vorgesehen sein.

In vorteilhafter Weiterbildung der Erfindung kann der genannte Druckmittelzylinder oder -aktor mit einem Aushubaktor gekoppelt sein, derart, dass eine Druckbeaufschlagung des Druckmittelzylinders erfolgen kann, wenn der Aushubaktor mit Druck beaufschlagt wird.

In vorteilhafter Ausgestaltung der Erfindung kann der genannte Rückstellaktor aktiv in Abhängigkeit vom ermittelten Auflagedruck oder Fahrwiderstand ansteuerbar sein.

Vorzugsweise kann der Aktor mittels einer Positionsüberwachung aktiv ansteuerbar sein, um die Belastung gleichmäßig auf die gesamte Arbeitsbreite der Mäheinheit und/oder des Mergers zu verteilen.

In vorteilhafter Weiterbildung der Erfindung kann der Trägerrahmen und/oder die Unterlenker mit Gummipuffern versehen sein, sodass der Trägerrahmen und/oder die Unterlenker in einer End- und/oder Transportposition an den Gummipuffern anliegen können.

Das erfindungsgemäße Verfahren umfasst, wie schon zum Ausdruck gebracht, die Stabilisierung der Pendelbewegung einer Mäheinheit und/oder eines Mergers, welche über das Dreipunktlenkersystem an einen Traktor angekoppelt werden. Die Mäheinheit ist hierbei in Arbeitsstellung pendelbar aufgehängt, um im Mähbetrieb den Bodenkonturen zu folgen. Die Mäheinheit und/oder der Merger werden in einer Ausgangsstellung gehalten, wenn der Traktor eine Kurvenfahrt ausführt und/oder die Mäheinheit in Vorgewendestellung gehalten wird und/oder eine Transportstellung eingenommen wird.

Gemäß der vorliegenden Erfindung ist vorgesehen, dass die Auslenkungen der Mäheinheit und/oder des Mergers im Mähbetrieb über den ersten und/oder zweiten Unterlenker auf das Drehkreuz mit dem Drehgelenk wirken können, wobei die Pendelbewegung durch das Drehkreuz mit dem Aktor stabilisiert werden kann.

Vorzugsweise können der Trägerrahmen und/oder die Unterlenker in der End- und/oder Transportstellung in Kontakt mit vorzugsweise dämpfenden Anschlägen oder Dämpferpads bzw. -elementen wie bspw. Gummipuffern gebracht werden, welche am Trägerrahmen und/oder den Unterlenkern angebracht sein können.

Die Erfindung wird nachfolgend anhand eines Ausführungsbeispiels und der Zeichnungen näher erläutert.

Hierbei zeigen:
- Fig. 1: System umfassend Traktor, Dreipunktlenkersystem und Mäheinheit
- Fig. 2: Dreipunktlenkersystem mit Unterlenkern und Drehkreuz sowie Querträger der Mäheinheit
- Fig. 3: Unterlenker verbunden mit Drehkreuz ausgestattet mit Hydraulikzylinder
- Fig. 4: Darstellung des Systems mit verschiedenen Stellungen des Mähbalkens in Arbeitsstellung mit Bodenauflage, A: gerade Ausrichtung des Mähbalkens, B: seitliche Auslenkung des Mähbalkens
- Fig. 5: Detaildarstellung des Dreipunktlenkersystems mit Querträger der Mäheinheit in Arbeitsstellung mit Bodenauflage in seitlicher Auslenkung
- Fig. 6: Unterlenker verbunden mit Drehkreuz in seitlicher Auslenkung
- Fig. 7: System mit stabilisierter Mäheinheit im Aushubprozess, A: Gesamtansicht, B: Ausschnitt mit seitlicher Detaildarstellung des Dreipunktlenkersystems mit Mäheinheit
- Fig. 8: System mit Mäheinheit in Transportstellung, A: Gesamtansicht, B: Ausschnitt mit seitlicher Detaildarstellung des Dreipunktlenkersystems mit Gummipuffern mit Mäheinheit
- Fig. 9: Detailausschnitt des Systems mit seitlich gedrehter Darstellung des Dreipunktlenkersystems mit Gummipuffern und Mäheinheit
- Fig. 10: Dreipunktlenkersystem mit Querträger der Mäheinheit und Hydraulikzylinder mit Hydraulikspeicher, A: Gesamtdarstellung, B: Detailausschnitt Drehkreuz mit Hydraulikzylinder und Hydraulikspeicher in seitlicher Auslenkung
- Fig. 11: Dreipunktlenkersystem mit Querträger der Mäheinheit und Drehstabfeder, A: Gesamtdarstellung, B: Detailausschnitt Drehkreuz mit Drehstabfeder in seitlicher Auslenkung
- Fig. 12: Dreipunktlenkersystem mit Querträger der Mäheinheit und Zug- und/oder Druckfeder, A: Gesamtdarstellung, B: Detailausschnitt Drehkreuz mit Zug- und/oder Druckfeder in seitlicher Auslenkung

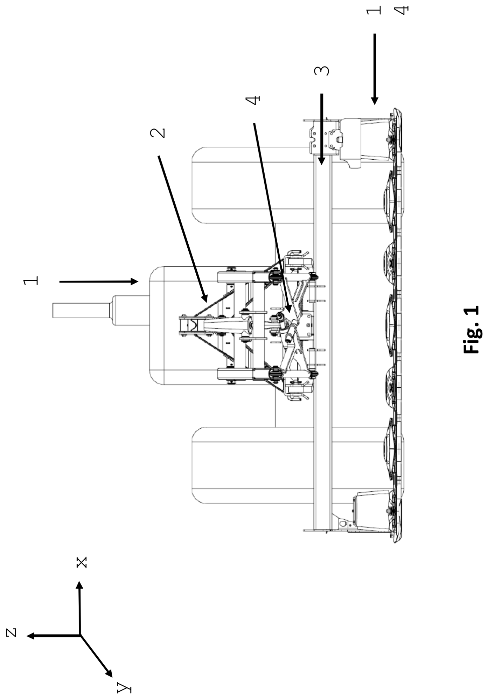

Fig. 1 zeigt den Traktor 1, das Dreipunktlenkersystem 2 und das Arbeitsaggregat 14, das in Form einer Mäheinheit und/oder eines Mergers ausgebildet sein kann.

Die Mäh- bzw. Arbeitseinheit 14 kann einen Querträger 3 aufweisen, welcher die Arbeits- bzw. Mähwerkzeuge wie bspw. Mähteller oder -trommeln trägt. Das Dreipunktlenkersystem 2 kann an diesem Querträger 3 angelenkt sein. Das Dreipunktlenkersystem 2 bildet eine gelenkige Aufhängung des Arbeitsaggregats und einen Teil der Verbindung von Arbeitsaggregat 14 und Traktor 1.

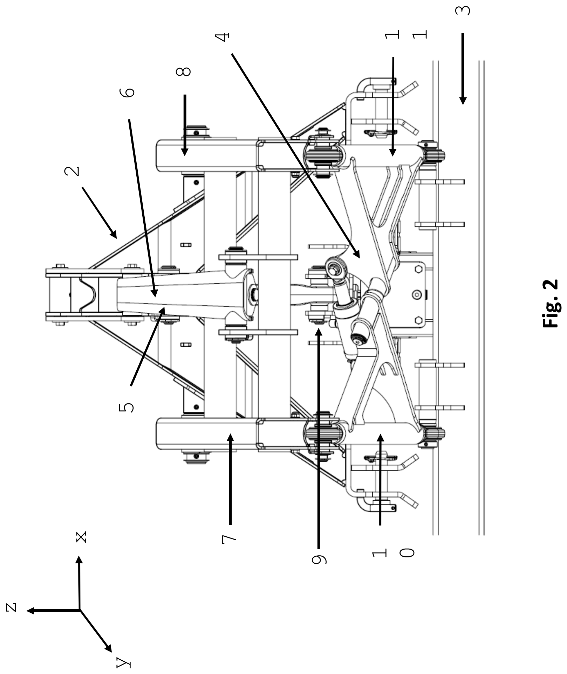

Fig. 2 zeigt das Dreipunktlenkersystem 2 mit den Unterlenkern 10, 11 und dem Drehkreuz 4 und dem Querträger 3 der Mäheinheit 14. Das Dreipunktlenkersystem 2 weist eine Lenkeranordnung auf. Hierbei bilden ein erster Lenker 7 und ein zweiter Lenker 8 einen Trägerrahmen.

Der Trägerrahmen 7, 8 kann über eine Querstrebe mit einem Hubarm 5 verbunden sein. Der Hubarm 5 kann in Verbindung mit einem Aushubaktor 6 stehen. Somit kann der Aushubaktor 6 auf den Trägerrahmen 7, 8 wirken und eine Positionsverstellung des Trägerrahmens 7, 8 hervorrufen. Hierbei kann der Trägerrahmen 7, 8 in Fahrtrichtung nach vorne abgesenkt bzw. nach hinten angehoben werden.

Am Trägerrahmen 7, 8 schließen der erste und der zweite Unterlenker 10, 11 an. Die Unterlenker 10, 11 sind schwenkbar am Trägerrahmen 7, 8 angelenkt. Weiterhin sind die Unterlenker 10, 11 am Querträger 3 der Mäheinheit 14 schwenkbar angelenkt. Die gelenkige Verbindung kann bspw. ein Kugelgelenk sein.

Der Hubarm 5 kann weiterhin mit dem Oberlenker 9 verbunden sein, welcher ebenfalls mit der Mäheinheit schwenkbar verbunden sein kann. Der erste Unterlenker 10 und der zweite Unterlenker 11 sind über ein Drehkreuz 4 miteinander verbunden.

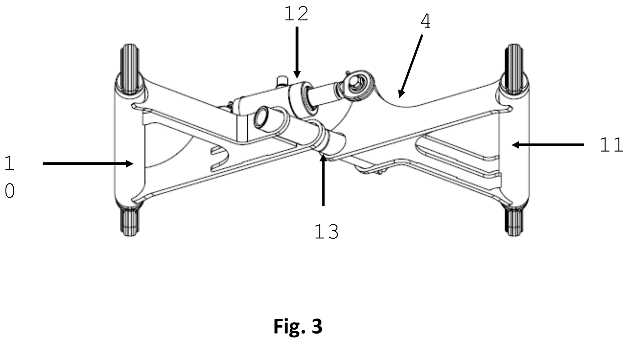

Fig. 3 zeigt die Unterlenker 10, 11 und deren Verbindung über das Drehkreuz 4. Die Unterlenker 10, 11 sind um eine schräge Achse, verlaufend vom Bereich um das Ende des zweiten Unterlenkers 11, welches mit der Mäheinheit 14 verbunden ist, zu dem Bereich um das Ende des ersten Unterlenkers 10, welches von der Mäheinheit abgewendet ist, durch ein Drehgelenk 13 drehbar gelagert. Siehe zur Verbindung der Unterlenker 10, 11 an die Mäheinheit 14 bzw. den Querträger 3 Fig. 2.

Die beschriebene schräge Achse kann alternativ vom Bereich um das Ende des ersten Unterlenkers 10, welches mit der Mäheinheit 14 verbunden ist, zu dem Bereich um das Ende des zweiten Unterlenkers 11, welches von der Mäheinheit 14 abgewendet ist, verlaufen. Die drehbare Lagerung der Unterlenker 10, 11 durch ein Drehgelenk 13 kann ebenfalls ausgeführt sein. Siehe zur Verbindung der Unterlenker 10, 11 an die Mäheinheit 14 bzw. den Querträger 3 Fig. 2.

Das Drehkreuz 4 kann zwei bspw. V-förmige Hälften umfassen, die an ihren spitz zulaufenden Enden durch das Drehgelenk 13 verbunden sind.

Das Drehkreuz 4 kann einen Rückstellaktor umfassen, der mit den Hälften des Drehkreuzes beabstandet vom Drehgelenk 13 verbunden sein kann und zum Erzeugen eines Moments vorgesehen sein kann, welches über die beiden Hälften des Drehkreuzes 4 auf die beiden Unterlenker 10, 11 wirken kann, sodass eine Rückstellung der Mäheinheit 14 in eine Ausgangsstellung nach einer Auslenkung über den ersten und zweiten Unterlenker 10, 11 erfolgen kann.

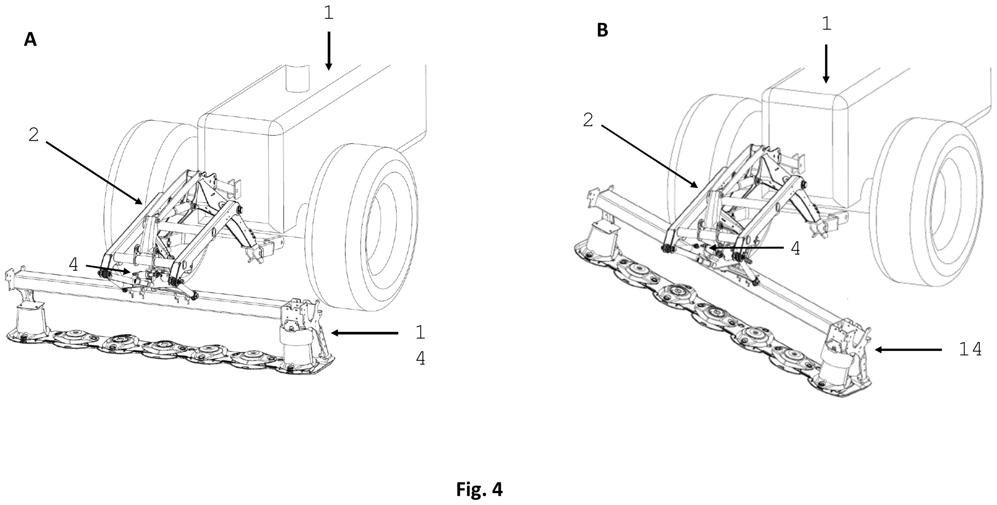

Fig. 4 zeigt eine Darstellung des Systems mit verschiedenen Stellungen des Mähbalkens oder der Mäheinheit 14 in Arbeitsstellung mit Bodenauflage. Fig. 4 A zeigt eine annähernd parallele Ausrichtung der Mäheinheit 14 zum Untergrund oder Boden. Fig. 4 B zeigt eine seitliche Auslenkung der Mäheinheit 14.

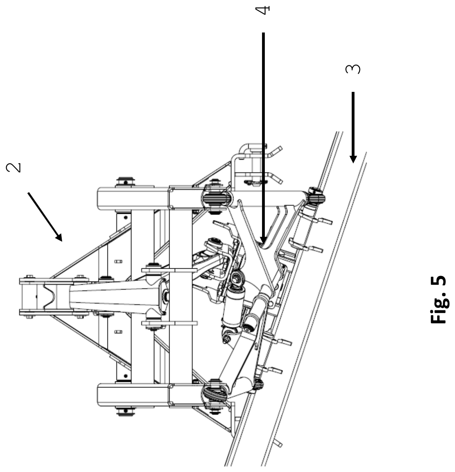

Fig. 5 zeigt eine Detaildarstellung des Dreipunktlenkersystems 2 mit den Unterlenkern 10, 11 in Verbindung mit dem Querträger 3 der Mäheinheit 14 in Arbeitsstellung mit Bodenauflage in seitlicher Auslenkung.

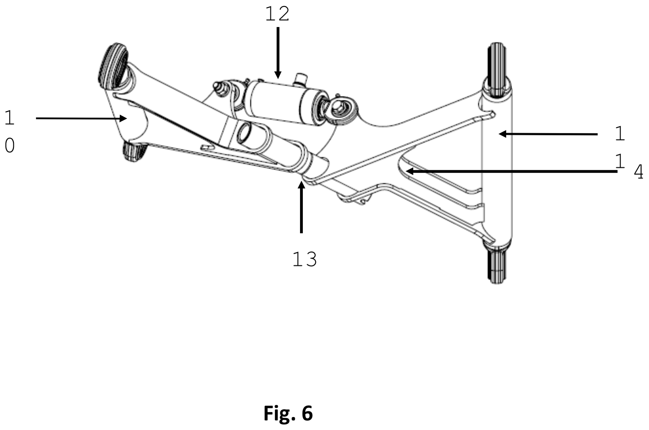

Fig. 6 zeigt eine Detaildarstellung der Unterlenker 10, 11 mit dem Drehkreuz 4 in seitlicher Auslenkung als Beispiel für den Fall einer schrägen Auslenkung in Arbeitsstellung der Mäheinheit 14. Der Aktor der auf das Drehkreuz wirkt kann einen Hydraulikzylinder umfassen.

Der Hydraulikzylinder, der mit den Hälften des Drehkreuzes seitlich des Drehgelenks 13 verbunden sein kann und zum Erzeugen eines Moments vorgesehen sein kann, welches über die beiden Hälften des Drehkreuzes 4 auf die beiden Unterlenker 10, 11 wirken kann, sodass eine Rückstellung der Mäheinheit 14 in eine Ausgangsstellung nach einer Auslenkung über den ersten und zweiten Unterlenker 10, 11 erfolgen kann.

Somit kann die Mäheinheit 14 durch das Einwirken des Aktors 12 aus einer schräg ausgelenkten Stellung, wie in Fig. 4 B dargestellt, zurück in eine Ausgangsstellung gebracht werden kann, wie in Fig. 4 A dargestellt.

Die Ausgangsstellung in die die Mäheinheit 14 zurückgestellt werden kann, kann eine Ausrichtung der Mäheinheit 14 zumindest näherungsweise rechtwinkling zur z-Achse des Dreipunktlenkersystems 2 sein, wobei die z-Achse eine aufrechte Achse näherungsweise senkrecht zur Bodenaufstandsfläche sein kann.

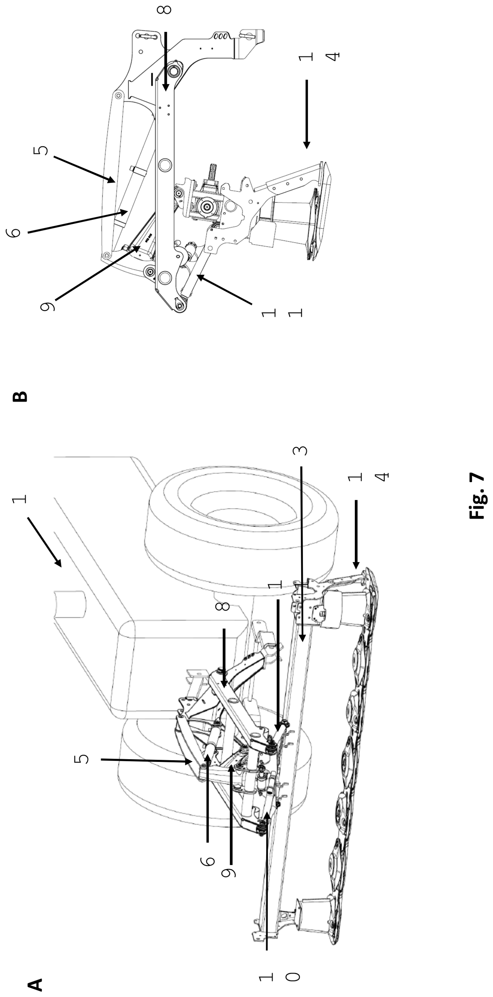

Fig. 7 A zeigt das System mit stabilisierter Mäheinheit 14 im Aushubprozess. Somit befindet sich die Mäheinheit 14 in einer Zwischenstellung beim Übergang von der Arbeitsstellung in die Transportstellung.

Fig. 7 B zeigt einen Ausschnitt der Mäheinheit 14 und des Dreipunktlenkersystems 2 in einer seitlichen Detaildarstellung.

Der Aktor kann über eine Steuerungseinheit gezielt ansteuerbar sein, derart, dass die Mäheinheit 14 in die Ausgangsstellung zurückgebracht wird, wenn die Mäheinheit 14 einer kurvigen Bewegung ausgesetzt ist und/oder sich in Vorgewendestellung und/oder Transportstellung befindet.

Somit kann eine aktive Stabilisierung der Mäheinheit 14 erfolgen und diese in einer gewünschten Stellung gehalten werden.

Vorteilhafterweise kann der Aktor aktiv in Abhängigkeit vom ermittelten Auflagedruck oder Fahrwiderstand ansteuerbar sein.

Der Aktor kann bspw. mittels einer Positionsüberwachung aktiv ansteuerbar sein, um die Belastung bzw. den Auflagedruck gleichmäßig auf die gesamte Arbeitsbreite der Mäheinheit zu verteilen. Die Positionsüberwachung kann die Stellung und oder den Auflagedruck mehrerer Abschnitte des Arbeitsaggregats, bspw. über die Breite des Aggregatsbalkens verteilt sensorisch erfassen oder anderweitig bestimmen, bspw. abschätzen.

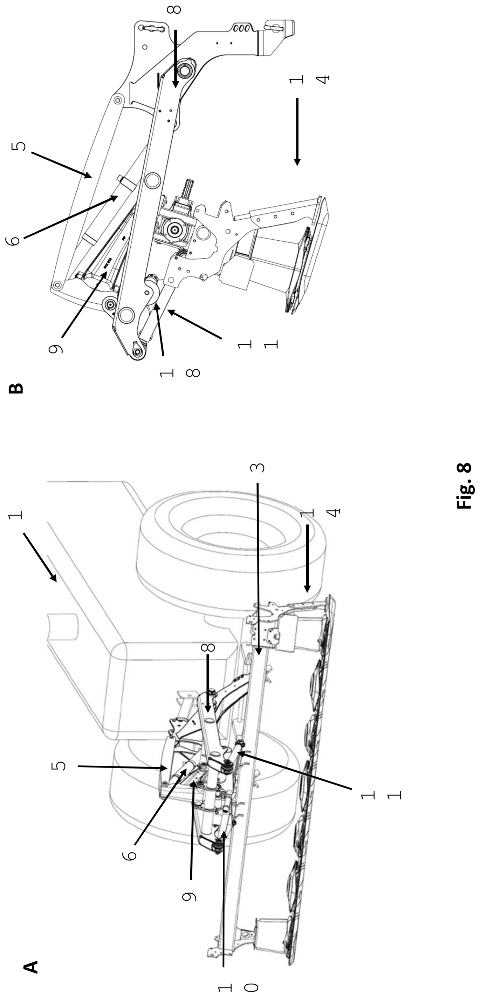

Fig. 8 A zeigt das System mit der Mäheinheit 14 in Transportstellung. Fig. 8 B zeigt einen Ausschnitt mit seitlicher Detaildarstellung des Dreipunktlenkersystems 2 mit Mäheinheit 14 und mit Gummipuffern 18.

Der Trägerrahmen 7, 8 und/oder die Unterlenker 10, 11 können mit Gummipuffern 18 oder ähnlichen Dämpferelementen bzw. -anschlägen versehen sein, sodass der Trägerrahmen 7, 8 und/oder die Unterlenker 10, 11 in einer End- und/oder Transportposition an den Gummipuffern 18 anliegen können.

Die Unterlenker 10, 11 können mit den Gummipuffern 18 fixiert sein.

Durch den Einsatz der Gummipuffer 18 kann eine zusätzliche Stabilisierung der Mäheinheit 14 in der Transportstellung erfolgen.

In der Transportstellung kann die Mäheinheit 14 sich aus Sicht der Fahrtrichtung in einer leicht nachhinten gekippten Stellung befinden.

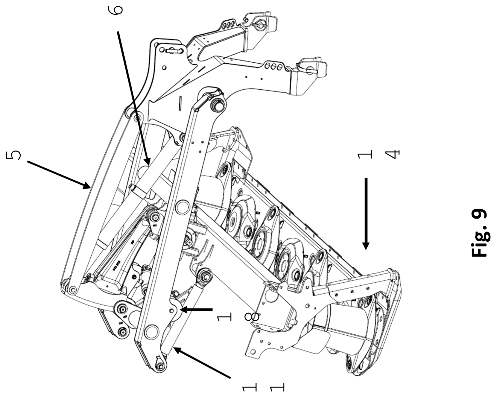

Fig. 9 zeigt einen Detailausschnitt des Systems mit seitlich gedrehter Darstellung des Dreipunktlenkersystems 2 mit der Mäheinheit 14 und mit den Gummipuffern 18.

Durch die Gummipuffer kann die Mäheinheit in der Transportstellung stabilisiert werden, insbesondere in der Weise, dass die Unterlenker 10, 11 nicht nur an den Gummipuffern anliegen können, sondern durch eine seitlich versetzte Positionierung an der Innenseite der Gummipuffer 18 entlang gleiten können. Hierdurch können die Gummipuffer 18 die Unterlenker 10, 11 an deren Außenseite überlagen und auf diese Weise seitliche Auslenkbewegungen der Mäheinheit 14 abpuffern.

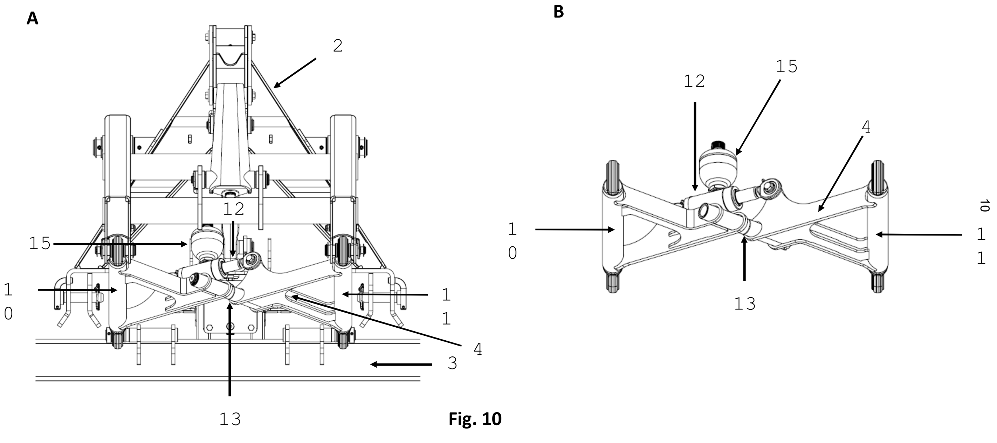

Fig. 10 A zeigt das Dreipunktlenkersystem 2 mit Querträger 3 und einem Hydraulikzylinder 12 mit einem Hydraulikspeicher 15. Fig. 10 B zeigt einen Detailausschnitt des Drehkreuzes 4 mit einem Hydraulikzylinder 12 und einem Hydraulikspeicher 15.

Alternativ kann der Hydraulikzylinder 12 mit dem Aushubaktor 6 gekoppelt sein, derart, dass eine Druckbeaufschlagung des Hydraulikzylinders 12 erfolgt, wenn der Aushubaktor 6 mit Druck beaufschlagt wird. Hierzu kann zwischen dem Aushubaktor 6 und dem Hydraulikzylinder 12 ein Druckfolgeventil montiert werden, sodass in der Abfolgesteuerung das Druckniveau im Hydraulikzylinder 12 erhöht werden kann. Somit kann das Mähwerk 12 in der Arbeitsposition freipendeln oder schwimmen und dadurch in seinen Bewegungen die Bodenkonturen abbilden. In der Vorgewende- oder Transportstellung kann der Hydraulikzylinder 12 jedoch durch die Betätigung des Aushubaktors 6 ebenfalls mit Druck beaufschlagt werden und damit für eine Stabilisierung der Mäheinheit sorgen.

Hierdurch liegt kein Einfluss durch etwaige Rückstellkräfte auf die Mäheinheit 14 vor. Die Mäheinheit 14 ist somit vollständig entlastet im Gegensatz zum Einsatz von Federsystemen. Weiterhin liegt bei der Stabilisierung der Mäheinheit durch den Hydraulikzylinder 12 keine Abhängigkeit von der Aushubhöhe vor.

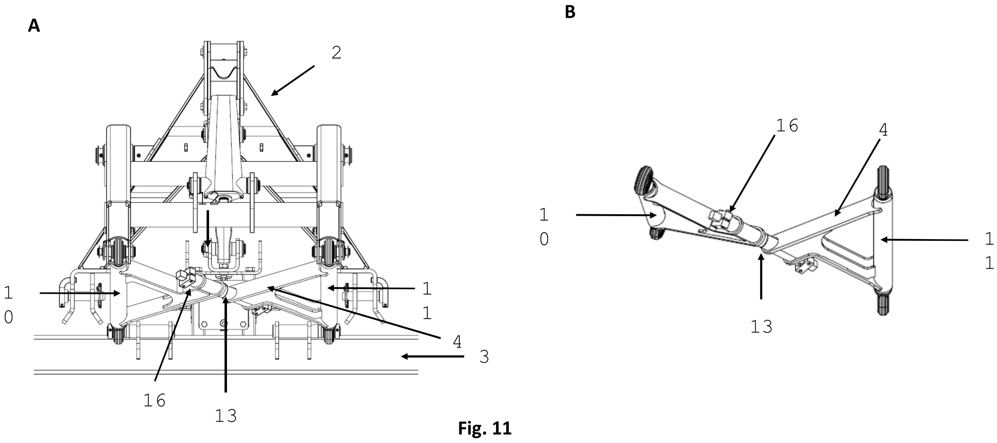

Fig. 11 A zeigt ein Dreipunktlenkersystem 2 mit Querträger 3 und Drehstabfeder 16. Fig. 11 B zeigt einen Detailausschnitt vom Drehkreuz 4 mit Drehstabfeder 16 in seitlicher Auslenkung.

Der Aktor kann eine Drehstabfeder 16 umfassen. Die Drehstabfeder 16 kann eine Vorspannung auf die drehbar gelagerten Hälften des Drehkreuzes 4 ausüben. Damit kann eine Stabilisierung der Pendelbewegung der Mäheinheit 14 erfolgen.

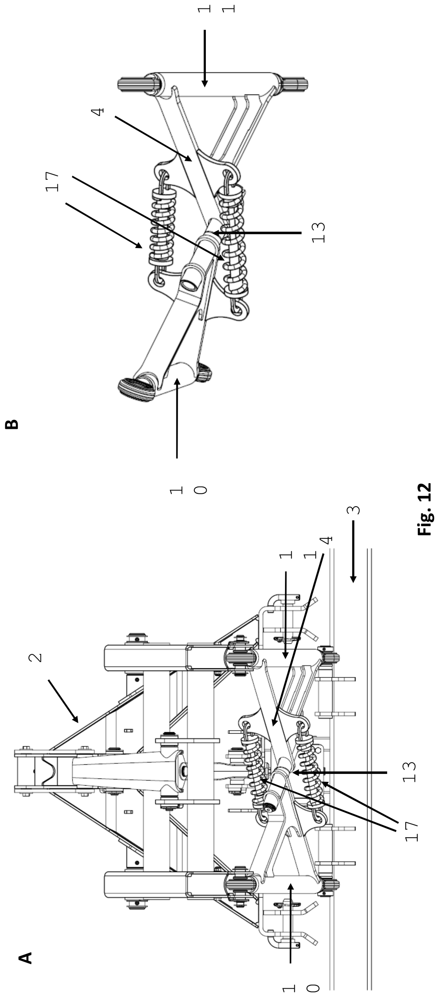

Fig. 12 A zeigt ein Dreipunktlenkersystem 2 mit Querträger 3 und Zug- und/oder Druckfeder 17. Fig. 12 B zeigt einen Detailausschnitt vom Drehkreuz 4 mit Zug- und/oder Druckfeder 17 in seitlicher Auslenkung.

Der Aktor kann eine Zug- und/oder Druckfeder 17 umfassen. Die Zug- und/oder Druckfeder 17 kann eine Vorspannung auf die drehbar gelagerten Hälften des Drehkreuzes 4 ausüben. Damit kann eine Stabilisierung der Pendelbewegung der Mäheinheit 14 erfolgen.

Zur Stabilisierung der Pendelbewegung einer Mäheinheit und/oder eines Mergers 14 kommt ein Verfahren zur Anwendung, welches das Dreipunktlenkersystem 2 gemäß eines der Ansprüche 1-14 nutzt.

Die Mäheinheit (14), welche über das Dreipunktlenkersystem 2 an den Traktor 1 angekoppelt ist, wird in Arbeitsstellung pendelbar aufgehängt, um im Mähbetrieb den Bodenkonturen zu folgen, wobei die Mäheinheit und/oder der Merger 14 in einer Ausgangsstellung gehalten wird, wenn der Traktor eine Kurvenfahrt ausführt und/oder die Mäheinheit 14 in Vorgewendestellung gehalten wird und/oder eine Transportstellung eingenommen wird.

Die Auslenkungen der Mäheinheit und/oder des Mergers 14 können im Mähbetrieb über den ersten und/oder zweiten Unterlenker 10, 11 auf das Drehkreuz 4 mit dem Drehgelenk 13 wirken, wobei die Pendelbewegung durch das Drehkreuz 4 mit dem Aktor stabilisiert werden kann. Dies ist in Fig. 4 A und Fig. 4 B dargestellt. Fig. 4 A zeigt hierbei die Arbeitsstellung des Mähbalkens der Mäheinheit 14 in paralleler Ausrichtung zum Untergrund und Fig. 4 B eine seitliche Auslenkung des Mähbalkens der Mäheinheit 14.

Die Mäheinheit 14 wird in einer Ausgangsstellung stabilisiert, wenn der Traktor 1 eine Kurvenfahrt ausführt und/oder die Mäheinheit 14 in Vorgewendestellung gehalten wird und/oder eine Transportstellung eingenommen wird.

Diese Ausgangsstellung, in der die Mäheinheit und/oder der Merger 14 gehalten wird, kann eine Ausrichtung zumindest näherungsweise rechtwinklig zur z-Achse des Dreipunktlenkersystems 2 sein, wobei die z-Achse eine aufrechte Achse näherungsweise senkrecht zur Bodenaufstandsfläche sein kann.

Die Vorgewendestellung kann mit einem Anheben der Mäheinheit 14 in z-Richtung verbunden sein, wie es in Fig. 7 A und Fig. 7 B dargestellt ist. Die Mäheinheit 14 kann sich hierbei somit in einem Aushubprozess befinden. Der Aushubprozess kann durch den Aushubaktor 6 initiiert werden.

Die Transportstellung ist in Fig. 8 A und Fig. 8 B dargestellt. Hierbei wird ersichtlich, dass der Trägerrahmen 7, 8 und/oder die Unterlenker 10, 11 in der End- und/oder Transportstellung in Kontakt mit den Gummipuffern (18) gebracht werden können, welche am Trägerrahmen 7, 8 und/oder den Unterlenkern 10, 11 angebracht sein können.

Die Mäheinheit und/oder der Merger 14 können durch den Aktor, welcher auf das Drehkreuz 4 wirkt, aus einer seitlich ausgelenkten Position zurück in die Ausgangsstellung gebracht werden. Fig. 6 zeigt das Drehkreuz 4, welches in diesem Fall mit einem Hydraulikzylinder 12 als Aktor versehen ist in einer seitlich ausgelenkten Stellung. Fig. 3 hingegen zeigt das Drehkreuz 4 mit dem Aktor zurück in der Ausgangsstellung.

### Bezugszeichenliste

- 1: Traktor
- 2: Dreipunktlenkersystem
- 3: Querträger
- 4: Drehkreuz
- 5: Hubarm
- 6: Aushubaktor
- 7: Trägerrahmen (erster Lenker)
- 8: Trägerrahmen (zweiter Lenker)
- 9: Oberlenker
- 10: Erster Unterlenker
- 11: Zweiter Unterlenker
- 12: Hydraulikzylinder
- 13: Drehgelenk
- 14: Mäheinheit
- 15: Hydraulikspeicher
- 16: Drehstabfeder
- 17: Feder
- 18: Gummipuffer

## Patentansprüche

1. Dreipunktlenkersystem (2) zur Stabilisierung der Pendelbewegung eines Arbeitsaggregats (14) einer Erntemaschine wie Mäheinheit und/oder Merger, welche an das Dreipunktlenkersystem (2) angekoppelt ist, umfassend einen an einen Schlepper anbaubaren Trägerrahmen (7, 8), einen Oberlenker (9), einen ersten Unterlenker (10) und einen zweiten Unterlenker (11), wobei der erste Unterlenker (10) und der zweite Unterlenker (11) einerseits an dem Arbeitsaggregat (14) und andererseits an dem Trägerrahmen jeweils gelenkig angelenkt sind, ***dadurch gekennzeichnet, dass*** der erste Unterlenker (10) und der zweite Unterlenker (11) über ein Drehkreuz (4) miteinander verbunden und um eine schräge Achse, verlaufend vom Bereich um das arbeitsaggregatsseitige Ende des zweiten Unterlenkers (11) zu dem Bereich um das tragrahmenseitige Ende des ersten Unterlenkers (10) durch ein Drehgelenk (13) des Drehkreuzes (4) zueinander drehbar gelagert sind.

2. Dreipunktlenkersystem (2) nach Anspruch 1, wobei das Drehkreuz (4) einen Rückstellaktor (12) umfasst, der mit zwei Abschnitten des Drehkreuzes (4) verbunden und zum Erzeugen eines Moments bezüglich des Drehgelenks (13) vorgesehen ist, welches über die beiden Abschnitte des Drehkreuzes (4) auf die beiden Unterlenker (10, 11) wirkt, sodass eine Rückstellung der Arbeitsaggregats (14) in eine Ausgangsstellung nach einer Auslenkung über den ersten und zweiten Unterlenker (10, 11) erfolgt.

3. Dreipunktlenkersystem (2) nach Anspruch 2, wobei die Ausgangsstellung eine Ausrichtung des Arbeitsaggregats (14) in oder tangential zu einer Ebene ist, die zumindest näherungsweise rechtwinkling zu einer z-Achse des Dreipunktlenkersystems (2) steht, wobei die z-Achse eine aufrechte Achse näherungsweise senkrecht zur Bodenaufstandsfläche der Erntemaschine oder des die Erntemaschine tragenden Schleppers ist.

4. Dreipunktlenkersystem (2) nach Anspruch 2 oder 3, wobei der Rückstellaktor (12) über eine Steuerungseinheit ansteuerbar ist derart, dass das Arbeitsaggregat (14) in die Ausgangsstellung zurückgebracht wird, wenn das Arbeitsaggregat (14) einer kurvigen Bewegung ausgesetzt ist und/oder sich in eine Vorgewende- und/oder Transportstellung ausgehoben ist.

5. Dreipunktlenkersystem (2) nach einem der Ansprüch 2-4, wobei der Rückstellaktor (12) eine Drehstabfeder (16) umfasst .

6. Dreipunktlenkersystem (2) nach einem der Ansprüch 2 -5, wobei der Rückstellaktor (12) eine Zug- und/oder einer Druckfeder (17) umfasst .

7. Dreipunktlenkersystem (2) nach einem der Ansprüche 2-6, wobei der Rückstellaktor (12) einen mit Druckmittel arbeitenden Stellzylinder, insbesondere Hydraulikzylinder umfasst, wobei der Stellzylinder mit einem Druckmittelspeicher (15) zur Druckbeaufschlagung und/oder Vorspannung des Stellzylinders verbunden ist und mit einem Aushubaktor (6) gekoppelt ist, derart, dass eine Druckbeaufschlagung des Stellzylinders zur Rückstellung des Arbeitsaggregats (14) erfolgt, wenn der Aushubaktor (6) mit Druck zum Ausheben des Arbeitsaggregats (14) beaufschlagt wird.

8. Dreipunktlenkersystem (2) nach einem der Ansprüche 2-7, wobei der Rückstellaktor (12) einen elektrischen Aktor umfasst .

9. Dreipunktlenkersystem (2) nach einem der Ansprüche 2-8, wobei der Rückstellaktor (12) aktiv in Abhängigkeit vom ermittelten Auflagedruck oder Fahrwiderstand ansteuerbar ist und/oder mittels einer Positionsüberwachung aktiv ansteuerbar ist, um die Belastung gleichmäßig auf die gesamte Arbeitsbreite der Mäheinheit und/oder Merger (14) zu verteilen.

10. Dreipunktlenkersystem (2) nach einem der vorhergehenden Ansprüche, wobei der Trägerrahmen (7, 8) und/oder die Unterlenker (10, 11) mit Dämpferanschlägen und/oder - elementen wie Gummipuffern (18) versehen sind, sodass der Trägerrahmen (7, 8) und/oder die Unterlenker (10, 11) in einer End- und/oder Transportposition an den Dämpferanschlägen und/oder - elementen anliegen.

11. Landwirtschaftliche Erntemaschine umfassend ein Dreipunktlenkersystem (2) gemäß einem der vorangegangenen Ansprüche und eine damit verbundenes Arbeitsaggregat (14) wie Mäheinheit und/oder Merger.

12. Landwirtschaftliche Erntemaschine nach dem vorhergehenden Anspruch, die als Anbaugerät in Form einer Mähmaschine und/oder eines Mergers zum Anbau, insbesondere Frontanbau, an einen Schlepper ausgebildet ist.

13. System umfassend einen Schlepper (1) und eine landwirtschaftliche Erntemaschine gemäß Anspruch 11 oder 12, wobei das Dreipunktlenkersystem (2) das Arbeitsaggregat (14) mit dem Schlepper (1) verbindet.

14. Verfahren zur Stabilisierung der Pendelbewegung eines Ernteaggregats (14) einer Erntemaschine, insbesondere einer Mäheinheit und/oder eines Mergers, welche über das Dreipunktlenkersystem (2) gemäß eines der Ansprüche 1-10 an einen Schlepper (1) angekoppelt wird, wobei das Ernteaggregat (14) in Arbeitsposition pendelnd aufgehängt wird, um den Bodenkonturen zu folgen, wobei das Arbeitsaggregat (14) in einer Ausgangsstellung gehalten wird, wenn der Schlepper eine Kurvenfahrt ausführt und/oder das Arbeitsaggregat (14) in eine Vorgewende- und/oder Transportstellung ausgehoben wird.

15. Verfahren nach dem vorhergehenden Anspruch, wobei die Pendelauslenkungen des Ernteaggregats (14) im Arbeitsbetrieb über den ersten und/oder zweiten Unterlenker (10, 11) über das Drehkreuz (4) in Drehbewegungen des Drehgelenks (13) umgesetzt werden durch das Drehkreuz (4) mittels des Rückstellaktors (12) stabilisiert werden.
